# EUROPÄISCHE PATENTSCHRIFT

(11) **EP 2 782 702 B1**
(45) Veröffentlichungstag und Bekanntmachung des Hinweises auf die Patenterteilung: **23.03.2016**
(21) Anmeldenummer: 12790543.8
(22) Anmeldetag: 21.11.2012
(51) Int. Cl.: B23K 11/00, B23K 11/087, B23K 11/31, B21D 22/20, B21D 24/16, B21D 37/16, B32B 15/04, B21D 22/02, B23K 11/16

(54) **VERFAHREN ZUM HERSTELLEN EINES VERBUNDBLECHTEILS MIT METALLISCHEM BEREICH ; ENTSPRECHENDES FORMWERKZEUG**
METHOD OF PRODUCING A COMPOSITE SHEET METAL PART HAVING A METALLIC REGION, AND CORRESPONDING MOLDING TOOL
PROCÉDÉ DE FABRICATION D'UNE PIÈCE EN TÔLE COMPOSITE COMPORTANT UNE ZONE MÉTALLIQUE ET OUTIL DE FORMAGE CORRESPONDANT

(30) Priorität: 23.11.2011 DE 102011055654
(43) Veröffentlichungstag der Anmeldung: 01.10.2014
(73) Patentinhaber: ThyssenKrupp Steel Europe AG, 47166 Duisburg (DE)
(72) Erfinder: CHERGUI, Azeddine, 44139 Dortmund (DE)
(74) Vertreter: Cohausz & Florack
(86) Internationale Anmeldenummer: PCT/EP2012/073178
(87) Internationale Veröffentlichungsnummer: WO 2013/076117

(56) Entgegenhaltungen:
- DE-A1-102007 043 015
- FR-A1- 2 709 083
- JP-A- 6 292 928
- JP-A- 61 115 687

## Beschreibung

Die Erfindung betrifft ein Verfahren zur Herstellung eines Verbundblechteils und ein Formwerkzeug zur Herstellung eines entsprechenden Verbundblechteils aus einer Verbundblechplatine gemäß dem Oberbegriff der Ansprüche 1 und 6 (siehe z.B FR 2 709 083 A)

Verbundblechteile werden häufig in Form eines Sandwichbleches, welches zwei äußere Deckbleche aufweist und eine zwischen den Deckblechen angeordnete nichtmetallische, üblicherweise aus Kunststoff bestehende Schicht aufweist, verwendet. Ein Grund für die zunehmende Verwendung von Verbundblechteilen liegt darin, dass Verbundblechteile Eigenschaften aufweisen können, welche sich bei einem Blech aus Völlmaterial häufig gegenseitig ausschließen. Ein Verbundblechteil ermöglicht beispielsweise trotz seines geringen Gewichts lokal sehr gute Steifigkeiten und kann gleichzeitig sehr gute Schalldämpfungseigenschaften bereitstellen. Viele Anwendungen erfordern es aber, dass diese Verbundblechteile mit anderen Blechteilen oder Metallteilen gefügt werden müssen. Die häufig bei Blechen angewendeten Fügeverfahren, wie Schmelzschweißen und Löten, verursachen allerdings Probleme aufgrund ihres hohen Wärmeeintrags. Bei einem hohen Wärmeeintrag können Schäden am Verbundblechteil dadurch entstehen, dass die zwischen den Deckblechen angeordnete nichtmetallische Schicht bzw. Kunststoffschicht beschädigt wird. Im Ergebnis kann oft eine ausreichend gute Verbindung zwischen einem Verbundblechteil und einem Metallteil nur schwer realisiert werden. Zur Lösung dieses Problems sind bisher unterschiedliche Ansätze versucht worden. Aus der japanischen Patentanmeldung JP 06-087079 A ist bekannt, den für die Verbindung mit weiteren Teilen benutzten Bereich eines Verbundblechteils für eine Schweißverbindung dadurch bereitzustellen, indem der Bereich des Verbundblechteils zunächst erwärmt wird, die beiden äußeren Deckbleche im Randbereich aufgebogen und die zwischen den Deckblechen angeordnete Kunststoffschicht unter Verwendung von abrasiven Mitteln entfernt wird. Anschließend werden die Deckbleche des Randbereichs miteinander verschweißt, so dass ein Verbundblechteil mit einem metallischen Bereich, also ein Bereich, welcher im Wesentlichen keine Kunststoffschicht aufweist und für die üblichen Fügeverfahren verwendet werden kann, zur Verfügung steht. Dieses Verfahren ist allerdings sehr aufwändig und lässt sich nur schwer automatisieren.

Hiervon ausgehend hat sich die Erfindung die Aufgabe gestellt, ein Verfahren sowie ein Formwerkzeug zur Verfügung zu stellen, mit welchem auf einfache Weise komplex geformte Verbundblechteile mit wenigen Verfahrensschritten herstellbar sind und welche dennoch metallische Bereiche aufweisen.

Gemäß einer ersten Lehre der vorliegenden Erfindung wird die oben aufgezeigte Aufgabe durch ein Verfahren, bei dem
- eine Verbundblechplatine in ein Formwerkzeug mit zwei Gesenkhälften eingelegt wird,
- im Formwerkzeug mindestens ein ausgewählter Bereich der Verbundblechplatine derart erwärmt wird, dass die zwischen den äußeren Deckblechen angeordnete Kunststoffschicht dort erweicht,
- unter Verwendung des Formwerkzeugs durch eine Kraftbeaufschlagung auf mindestens ein äußeres Deckblech in diesem Bereich die Deckbleche punkt- oder bereichsweise gegeneinander gedrückt werden, so dass die Kunststoffschicht aus dem mit einer Kraft beaufschlagten Bereich austritt und ein metallischer Bereich erzeugt wird und
- anschließend an die Kraftbeaufschlagung oder gleichzeitig mit der Kraftbeaufschlagung beide Deckbleche im gequetschten Bereich zumindest bereichs- oder punktweise miteinander gefügt werden,
dadurch gelöst, dass die Erwärmung des ausgewählten Bereichs der Verbundblechplatine im Formwerkzeug unter Verwendung von im Formwerkzeug angeordneten Mitteln zur lokalen Temperierung der Verbundblechplatine erfolgt.

Erfindungsgemäß wird der mindestens eine metallische Bereich, vorzugsweise die metallischen Bereiche des Verbundblechteils, d.h. die Bereiche des Verbundblechteils, in welchen die Kunststoffschicht zwischen den beiden Deckblechen im Wesentlichen entfernt wurde, unter Verwendung eines Formwerkzeugs erzeugt, so dass die Herstellung entsprechender Verbundblechteile auf einfache Weise automatisiert werden kann. Das Formwerkzeug kann in einer Presse angeordnet werden, welche die Öffnungs- und Schließbewegung bereitstellt. Die Herstellung der Verbundblechteile mit metallischem Bereich kann insofern in bestehende Fertigungsanlagen lediglich durch Verwendung von Formwerkzeugen integriert werden. Damit reduzieren sich die Herstellkosten von Verbundblechteilen mit mindestens einem metallischen Bereich. Wie bereits ausgeführt, können die derart hergestellten Verbundblechteile über die metallischen Bereiche mit anderen Bauteilen gefügt, beispielsweise geschweißt werden.

Erfindungsgemäß erfolgt die Erwärmung des mindestens einen ausgewählten Bereichs der Verbundblechplatine im Formwerkzeug unter Verwendung von Mitteln zur lokalen Temperierung der Verbundblechplatine. Beispielsweise können die Formwerkzeugflächen, welche mit dem Verbundblechplatine in Kontakt stehen, die Verbundblechplatine konduktiv erwärmen bzw. temperieren. Andererseits ist auch denkbar andere Verfahren zur Erwärmung zu verwenden, beispielsweise konvektive oder auch eine Erwärmung durch Strahlung. Durch die gezielte, lokale Erwärmung von Bereichen der Verbundblechplatine ist es möglich, lediglich in diesen Bereichen die Kunststoffschicht zwischen den Deckblechen zu entfernen. Durch die Temperierung der Bereiche der Verbundblechteile über die Formwerkzeugflächen kann auf einfache Weise in einem einzigen Arbeitsschritt über die Formwerkzeugflächen, die mit diesen Bereichen bzw. mit diesem Bereich der Verbundblechplatine in Kontakt stehen, eine Erwärmung und gleichzeitig eine Kraftbeaufschlagung erfolgen. Als Mittel zur lokalen Temperierung der Verbundblechplatine sind vorzugsweise im Formwerkzeug Heiz- und optional Kühlelemente angeordnet, welche die Verbundblechplatine zumindest in dem ausgewählten Bereich temperieren. Heizelemente können sowohl über Heizmedienführungen oder aber durch elektrische Heizelemente realisiert werden. Kühlelemente werden in der Regel durch Kühlmittelführungen bereitgestellt. Sind Heiz- und Kühlelemente beispielsweise vorgesehen, kann die Erwärmung der Formwerkzeugflächen besonders genau auf die notwendigen Bereiche des Formwerkzeugs beschränkt werden.

Gemäß einer nächsten Ausführungsform des Verfahrens formen, tiefziehen, schneiden und/oder prägen im Formwerkzeug vorgesehene formgebende Mittel die Verbundblechplatine während oder nach der Erzeugung der metallischen Bereiche. Formgebende Mittel sind beispielsweise Tiefziehstempel, Prägestempel, Biegestempel, Schneiden oder Messer. Hierdurch kann im Prozess der Erzeugung der metallischen Bereiche des Verbundblechteils, d.h. in einem einzigen Arbeitsschritt, die Verbundblechplatine zusätzlich formgebenden Schritten unterzogen werden, so dass weitere Arbeitsschritte in das erfindungsgemäße Verfahren integriert sind.

Gemäß einer nächsten Ausführungsform des Verfahrens fließt beim Formen der metallischen Bereiche des Verbundblechteils der Kunststoff zwischen den Deckblechen in im Formwerkzeug vorgesehene Hohlräume. Durch die im Formwerkzeug vorgesehenen Hohlräume kann die Fließrichtung des Kunststoffes, welcher aus den metallischen Bereichen verdrängt wird, gezielt beeinflusst und gesteuert werden. Zusätzliche Steuerungsmöglichkeiten ergeben sich auch durch die Temperierung. Insbesondere ermöglicht der Hohlraum, dass sich die Verbundblechplatine in den Bereichen, in welchen der Kunststoff verdrängt wird, ausdehnen kann.

Für den Fall, dass metallische Deckbleche verwendet werden, deren Verformungswiderstand größer als die Kraft des verdrängten Kunststoffes ist und der verdrängte Kunststoff die Verformung der Deckbleche nicht bewirken kann, sind gemäß einer weiteren Ausführungsform, beispielsweise in den im Formwerkzeug vorgesehenen Hohlräumen, Mittel zum Durchdringen der metallischen Decksicht als auch Mittel zur Absaugung des in Folge der Kunststoffverdrängung aus den erzeugten Öffnungen in den Deckblechen austretenden Kunststoffs vorgesehen, mit welchen der verdrängte Kunststoff abgesaugt werden kann.

Ein fertig beschnittenes Verbundblechteil kann gemäß einer nächsten Variante des Verfahrens dadurch zur Verfügung gestellt werden, dass die Verbundblechplatine nach dem Einbringen der metallischen Bereiche durch im Formwerkzeug vorgesehene Schneidmittel beschnitten wird. Die Integration des Schneidvorgangs in den Formgebung- bzw.
Herstellungsprozess zur Bereitstellung der metallischen Bereiche führt zu einer weiteren Steigerung der Automatisierung, da ein Beschneiden außerhalb des Formwerkzeugs nicht mehr notwendig ist und ein im Wesentlichen fertiges Verbundblechteil erzeugt werden kann.

Gemäß einer zweiten Lehre der vorliegenden Erfindung wird die oben aufgezeigte Aufgabe durch ein Formwerkzeug zur Herstellung eines Verbundblechteils mit
- mindestens zwei Gesenkhälften, welche relativ zueinander bewegbar sind,
- Mitteln zur Aufnahme einer Verbundblechplatine in einer Gesenkhälfte, und mit
- Mitteln zur Umformung der Verbundblechplatine in ein Verbundblechteil,
dadurch gelöst, dass im Formwerkzeug Mitteln zur Kraftbeaufschlagung mindestens eines äußeren Deckblechs in mindestens einem ausgewählten Bereich der Verbundblechplatine, so dass die Deckbleche punkt- oder bereichsweise gegeneinander gedrückt werden, so dass der Kunststoff in dem ausgewählten Bereich der Verbundblechplatine zumindest teilweise austreten kann und ein metallischer Bereich erzeugt wird, und Temperierungsmittel vorgesehen sind, um die Verbundblechplatine in den ausgewählten Bereichen zu temperieren.

Ein entsprechendes Formwerkzeug ist in der Lage, mit einer in den ausgewählten Bereichen erwärmten Platine, welche beispielsweise außerhalb des Werkzeugs erwärmt wurde, den oder die ausgewählten Bereiche mit einer Kraft zu beaufschlagen, so dass die Deckbleche zusammengedrückt werden und die zwischen den Deckblechen angeordnete Kunststoffschicht aus den ausgewählten, erwärmten Bereichen der Verbundblechplatine austritt bzw. dort im Wesentlichen entfernt wird. Der Herstellprozess für Verbundblechteile mit metallischem Bereich wird durch die Verwendung des erfindungsgemäßen Formwerkzeugs deutlich vereinfacht.

Erfindungsgemäß sind im Formwerkzeug Temperierungsmittel vorgesehen, um die Verbundblechplatine in den ausgewählten Bereichen zu temperieren. Die Temperierungsmittel können beispielsweise die Werkzeugoberflächen des Formwerkzeugs erwärmen oder unmittelbar mit der Verbundblechplatine in Kontakt treten. Darüber hinaus sind auch Temperierungsmittel denkbar, welche die Verbundblechplatine konvektiv oder über Strahlung erwärmen.

Vorzugsweise umfassen die Temperierungsmittel Heizmittel und Kühlungsmittel. Durch die Verwendung von Heizmitteln und Kühlungsmitteln können ausgewählte Bereiche gezielt erwärmt und ein Wärmetransport in andere Bereiche des Formwerkzeugs gezielt durch Anordnung von Kühlungsmitteln unterbunden werden. Im Ergebnis können die ausgewählten Bereiche der Verbundblechplatine, aus welchen der Kunststoff entfernt werden soll, gezielt und lokal begrenzt erwärmt werden. Durch die Begrenzung der Erwärmung auf die lediglich notwendigen Bereiche des Formwerkzeugs kann eine deutlich höhere Prozesssicherheit bei der Herstellung der Verbundblechteile erzielt werden. Denkbar ist auch, den Wärmeübergang aus erwärmten Formwerkzeugsbereichen in benachbarte Bereiche des Formwerkzeugs durch Verwendung von Materialien mit geringer Wärmeleitung zu unterbinden.

Gemäß einer nächsten Ausführungsform des Formwerkzeugs sind im Formwerkzeug Mittel vorgesehen, mit welchen die Verbundblechplatine während oder nach der Erzeugung der metallischen Bereiche geformt, tiefgezogen, geschnitten und/oder geprägt werden kann. Diese zusätzlichen Mittel ermöglichen es weitere Arbeitsschritte in die Bereitstellung der metallischen Bereiche des Verbundblechteils zu integrieren und eine weitere Steigerung der Automatisierung zu ermöglichen. Insbesondere wird hiermit ermöglicht, das Verbundblechteil im Formwerkzeug fertig herzustellen, so dass weitere Arbeitsschritte nicht mehr notwendig werden.

Vorzugsweise sind im Formwerkzeug zudem Mittel zum Fügen der Deckbleche des mindestens einen metallischen Bereichs des Verbundblechteils vorgesehen, so dass der Fügevorgang der Deckbleche in den metallischen Bereichen im Formwerkzeug durchgeführt werden kann. Beispielsweise könnte über eine Glasfäser ein Laserschweißstrahl im Formwerkzeug punkt- oder nahtförmige Fügeverbindungen erzeugen. Darüber hinaus ist auch das Anordnen von Fügelektroden zum Widerstandsschweißen denkbar.

Vorzugsweise ist mindestens ein Formhohlraum vorgesehen, welcher zur Aufnahme von verdickten Bereichen der Verbundblechplatine dient. Diese verdickten Bereiche der Verbundblechplatine werden durch das Fließen des Kunststoffs aus den ausgewählten, erwärmten Bereichen erzeugt. Die Verbundblechplatine kann sich in den dafür vorgesehenen Formhohlräumen ausdehnen.

Alternativ oder kumulativ kann gemäß einer weiteren Ausführungsform eine Absaugvorrichtung zur Entfernung des Kunststoffes nach dem Austreten aus den ausgewählten Bereichen der Verbundblechplatine vorgesehen sein. Die Absaugvorrichtung ermöglicht es beispielsweise anstelle eines Formhohlraums den austretenden Kunststoff unmittelbar am Austrittsbereich abzusaugen und damit zu entfernen. Damit kann prinzipiell auf einen Formhohlraum verzichtet werden. Allerdings ist auch die gemeinsame Anwendung von Formhohlräumen und/oder Mittel zur Durchdringung der metallischen Deckbleche und Absaugvorrichtungen möglich.

Im Weiteren soll die Erfindung anhand von Ausführungsbeispielen in Verbindung mit der Zeichnung näher erläutert werden. In der Zeichnung zeigt
- Fig. 1 bis Fig. 5: ein Ausführungsbeispiel eines Formwerkzeugs während der Durchführung eines Ausführungsbeispiels des Verfahrens,
- Fig. 6a) bis d): in einer schematischen Schnittansicht erfindungsgemäß hergestellte Verbundblechteile,
- Fig. 7a) bis e): in einer schematischen Ansicht die Herstellung eines Verbundblechteils mit metallischem Bereich und dessen Anwendung an weitere Bauteile,
- Fig. 8a) und b): ein zweites Ausführungsbeispiel eines erfindungsgemäßen Formwerkzeugs zur Herstellung tiefgezogener Verbundblechteile während zwei verschiedener Verfahrensschritte und
- Fig. 9a) bis 11b): ein drittes Ausführungsbeispiel eines erfindungsgemäßen Formwerkzeugs, während der Durchführung eines Ausführungsbeispiels des Verfahrens.

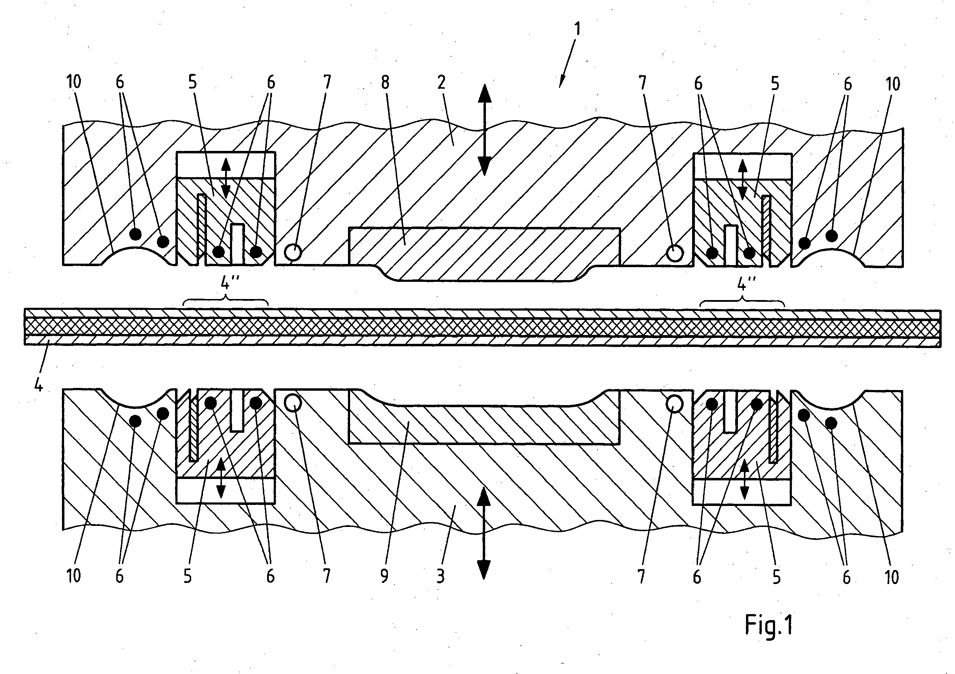

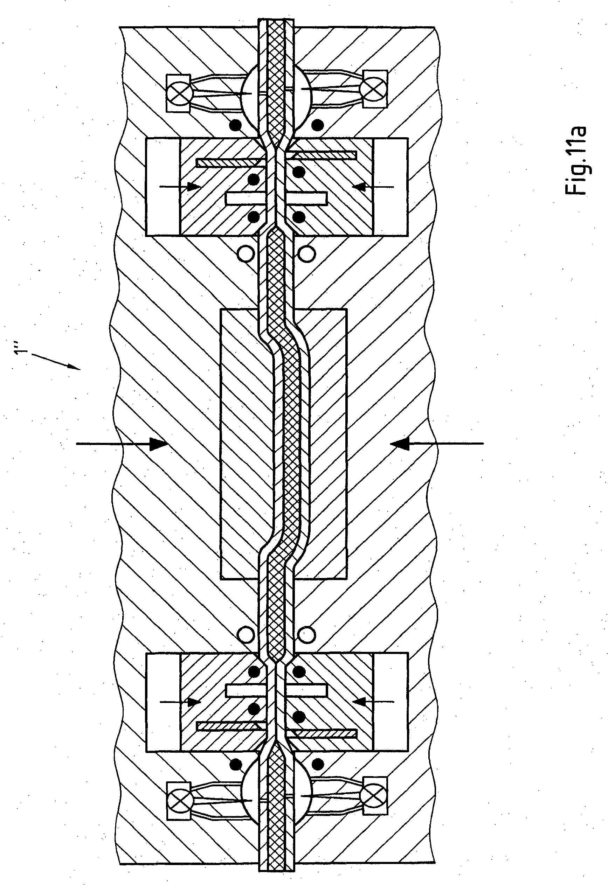

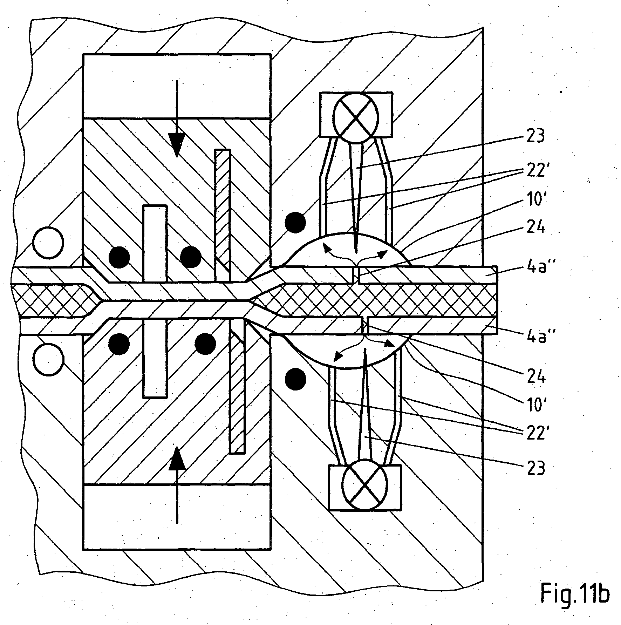

Die in den Fig. 1 bis 11b) dargestellten Ausführungsbeispiele der Verbundblechplatine weisen, wie in den Figuren angedeutet, Deckbleche auf, welche eine geringere Wanddicke als die zwischen den Deckblechen angeordnete Kunststoffschicht aufweisen. Die Zeichnungen sind aber nicht maßstabgerecht. Beispielsweise können die metallischen Deckbleche eine Wanddicke von 0,1 mm bis 0,3 mm aufweisen, wohingegen die Kunststoffschicht eine Wanddicke von 0,35 mm bis 0,8 mm aufweist. Entsprechende Verbundteile weisen gegenüber Vollmaterialien erhebliche Gewichtsvorteile auf und können mit dem erfindungsgemäßen Verfahren besonders gut gefügt werden.

Fig. 1 zeigt in einer schematischen Schnittansicht zunächst ein Formwerkzeug 1 bestehend aus zwei Gesenkhälften 2, 3, zwischen welche eine Verbundblechplatine 4 eingelegt wird. Die Verbundblechplatine 4 ist vorliegend eben ausgeführt. Sie kann allerdings optional auch weiteren Formgebungsschritten unterzogen worden sein, bevor die Verbundblechplatine 4 in das Formwerkzeug eingelegt wird. Darüber hinaus sind in dem Formwerkzeug 1 Mittel 5 zur Kraftbeaufschlagung sowohl in der oberen Gesenkhälfte 2 als auch in der unteren Gesenkhälfte 3 in Form von bewegbaren Stempeln 5 vorgesehen. Des Weiteren umfasst das Formwerkzeug 1 Mittel zur Umformung der Verbundblechplatine in form eines Prägestempels 8 sowie einer Matrize 9. Die beiden Gesenkhälften 2, 3 können relativ zueinander bewegt werden, so dass das Formwerkzeug 1 geöffnet und geschlossen werden kann.

Die Heizelemente 6 sowie die Kühlelemente 7 ermöglichen es vorliegend, zwei ausgewählte Bereiche der Verbundblechplatine 4 entsprechend stark zu erwärmen, so dass durch die Kraftbeaufschlagungsmittel, in Form der Stempels 5, welcher bevorzugt ebenfalls temperiert ist, der Kunststoff aus diesem Bereich 4" der Verbundblechplatine 4 in den Formhohlraum 10 gedrückt werden kann. Die Stempel 5 sind hierzu in ihrer vertikalen Position verfahrbar angeordnet. Wie der Kunststoff 4b in dem entsprechend ausgewählten Bereich 4" entfernt wird, zeigen die nächsten Figuren.

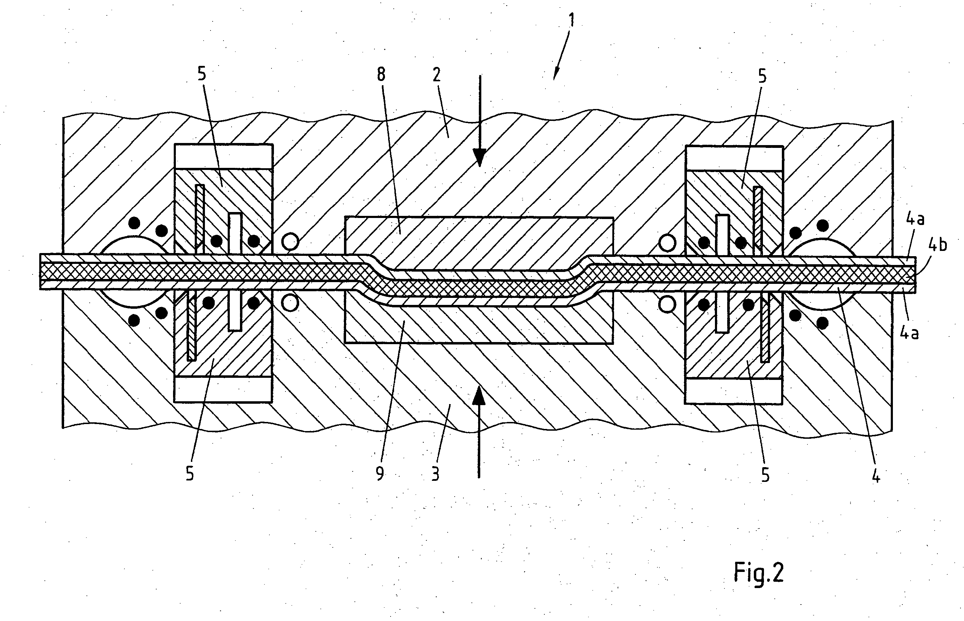

So zeigt Fig. 2 das Formwerkzeug 1 in geschlossenem Zustand, wobei der Formstempel 8 das Verbundblechteil 4, welches aus den Deckblechen 4a und der Kunststoffschicht 4b besteht, bereits in die Matrize 9 geformt hat. Das Ausführungsbeispiel zeigt damit sehr gut, wie sich weitere Arbeitsschritte in den Herstellprozess der Verbundblechteile 40 mit metallischem Bereich integrieren lassen. Die Temperierungsmittel 6, 7 können Kontakt mit dem Verbundblechteil 4 haben oder sind derart angeordnet, dass die Formwerkzeugflächen, welche mit dem Verbundblechteil Kontakt haben, erwärmt werden, so dass die entsprechenden Bereiche des Verbundblechteils erwärmt werden und die Kunststoffschicht 4b des Verbundblechteils 4 dort erweicht. Die Kühlungsmittel 7 gewährleisten dabei, dass die Kunststoffschicht 4b nur in dem ausgewählten vorliegenden Randbereich der Blechplatine 4 erweicht und damit herausgedrängt werden kann. Diese wirken also zusammen mit dem vorgesehenen Hohlraum 10, in welchen sich die Verbundblechplatine hin ausdehnen kann.

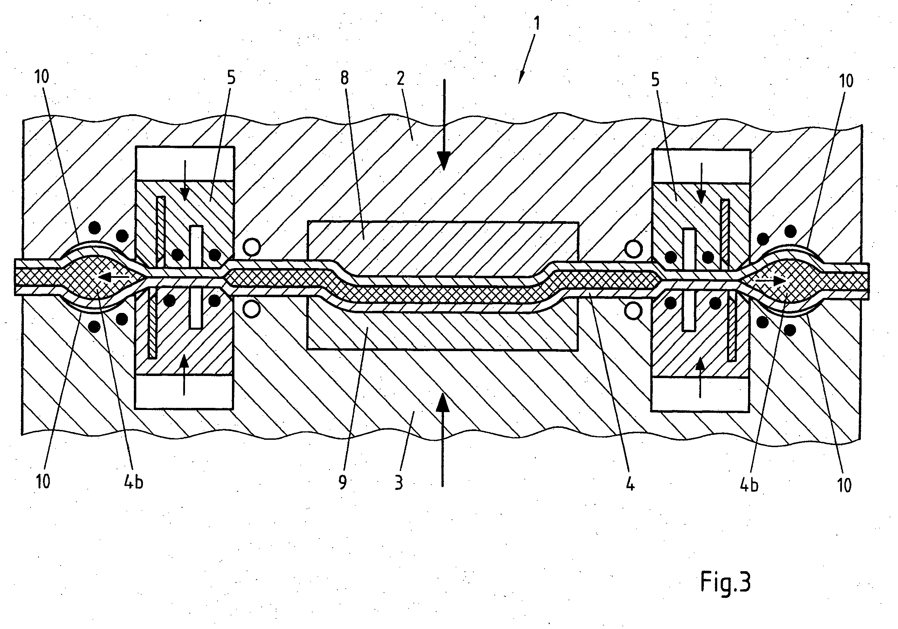

Dies zeigt Fig. 3, in welcher zu erkennen ist, dass die Stempel 5 nunmehr zusätzlich relativ zueinander bewegt wurden, so dass eine Kraft auf die Verbundblechplatine 4 im Bereich der Stempel 5 ausgeübt wurde und der Kunststoff 4b nach außen verdrängt wird. Die Bewegung der Stempel 5 kann bei geschlossenem Werkzeug oder noch teilweise offenem Formwerkzeug 1 durchgeführt werden. Zu erkennen ist zudem, dass der Kunststoff 4b in den Formhohlraum 10 verdrängt wird, so dass die Verbundblechplatine 4 in diesem Bereich eine vergrößerte Dicke aufweisen kann. Hierdurch wird erreicht, dass auf einfache Weise der Kunststoff aus den Bereichen, in welchen der Stempel 5 die Verbundblechplatine 4 mit einer Kraft beaufschlägt, heraustreten kann.

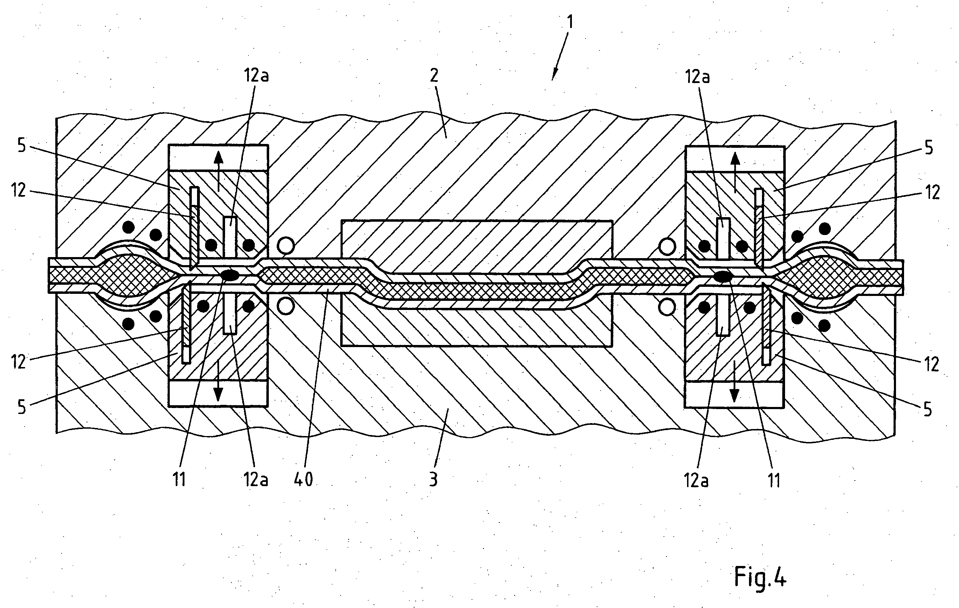

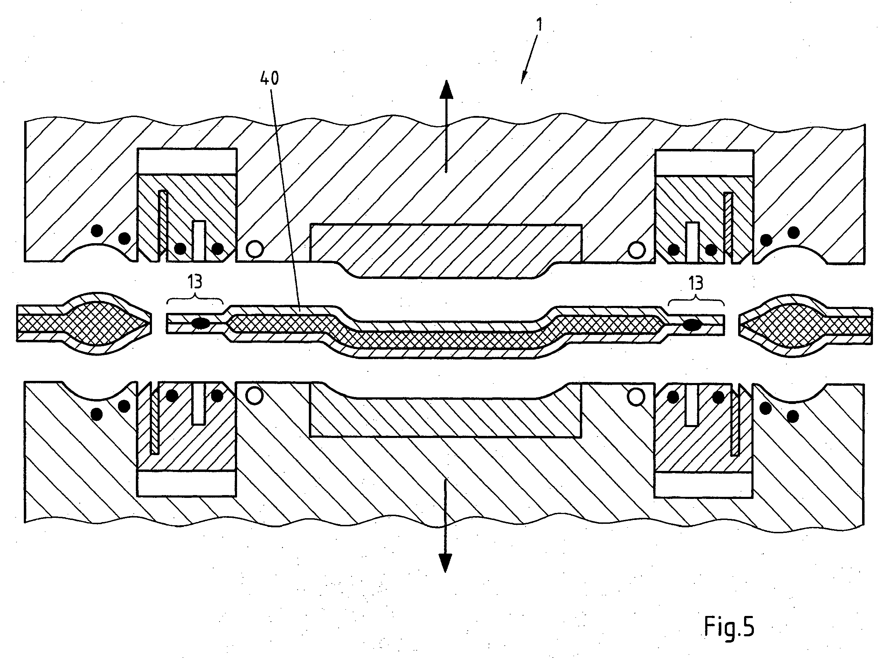

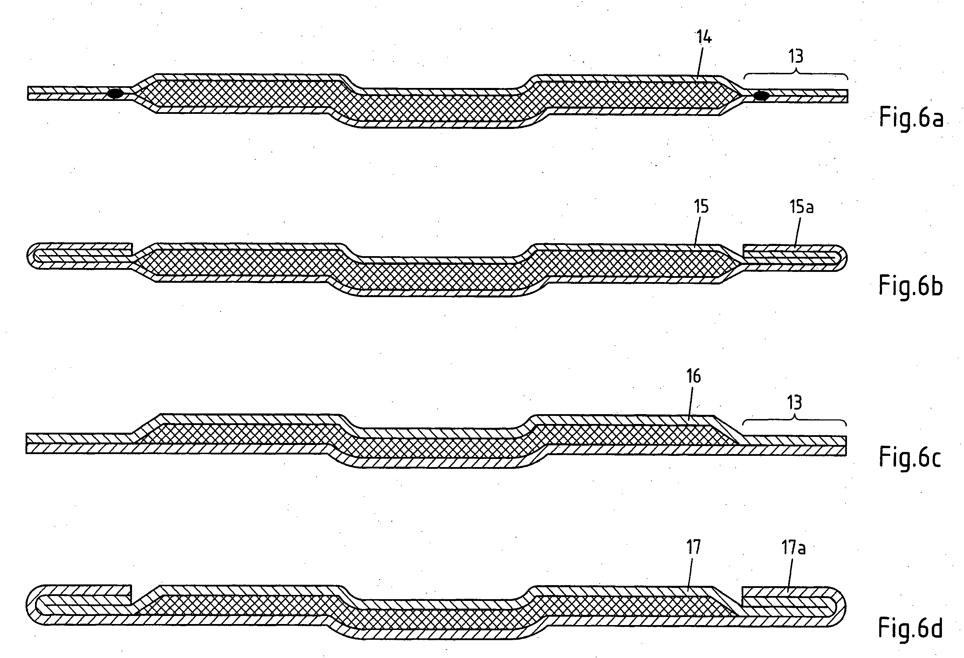

Fig. 4 zeigt nun das Formwerkzeug 1 aus den Fig. 1 bis 3 mit wieder eingefahrenen Stempeln 5. Allerdings ist zwischenzeitlich die Verbundblechplatine 4 unter Verwendung der angedeuteten Fügemittel 12a im metallischen Bereich bereichsweise mit einer Fügenaht 11 gefügt worden. Die äußeren Bereiche der Verbundblechteils 40, welche verdickt wurden, können unter Verwendung von Schneiden 12, welche hier angedeutet sind, von dem fertigen Verbundblechteil 4 getrennt werden. Dies ist in Fig. 5 dargestellt, welche das Formwerkzeug 1 in wieder geöffnetem Zustand zeigt. Nach Öffnen des Werkzeugs steht ein fertiges Verbundblechteil 4' zur Verfügung, welches metallische Bereiche 13 aufweist, die besonders gut zur Anbindung des Verbundblechteils an weitere Teile geeignet sind. Schnittansichten von unterschiedlichen Ausführungsformen von Verbundblechteilen, welche mit dem erfindungsgemäßen Verfahren hergestellt sind, zeigt Fig. 6a) bis 6d). Zu erkennen in der Schnittansicht ist insbesondere, dass das Verbundblechteil 14, 15, 16 und 17 umgeformte Bereiche, in welchen die Sandwichstruktur des Verbundblechteils besteht, aufweist und dazu Bereiche 13 vorgesehen sind, welche rein metallisch sind und zur Anbindung an weitere Bauteile genutzt werden können. Die Verbundblechteile 14 und 16 unterscheiden sich dabei jeweils dadurch, dass der metallische Bereich 13 durch ein beidseitiges Kraftbeaufschlagen (Verbundblechteil 14) oder durch ein einseitiges Kraftbeaufschlagen (Verbundblechteil 16) hergestellt worden ist. Eine besonders effektive Methode, dass Verbundblechteil 14, 15, 16, 17 an ein weiteres Verbundblechteil anzubinden, besteht darin, eine Falz 15a, 17a, wie sie in Fig. 6b) und Fig. 6d) dargestellt ist, herzustellen. Die Falz 15a, 17a kann beispielsweise die Dicke in dem rein metallischen Bereich soweit erhöhen, dass kein Dickenunterschied zwischen dem mit Kunststoff versehenen Teil des Verbundblechteils und dem metallischen Bereich verbleibt. Darüber hinaus bietet eine Falz 17a auch eine Möglichkeit, einen Formschluss bzw. einen Kraftschluss mit einem weiteren Teil durchzuführen bzw. die Falz zur stoffschlüssigen Verbindung unter Verwendung beispielsweise eines Schweißverfahrens herzustellen.

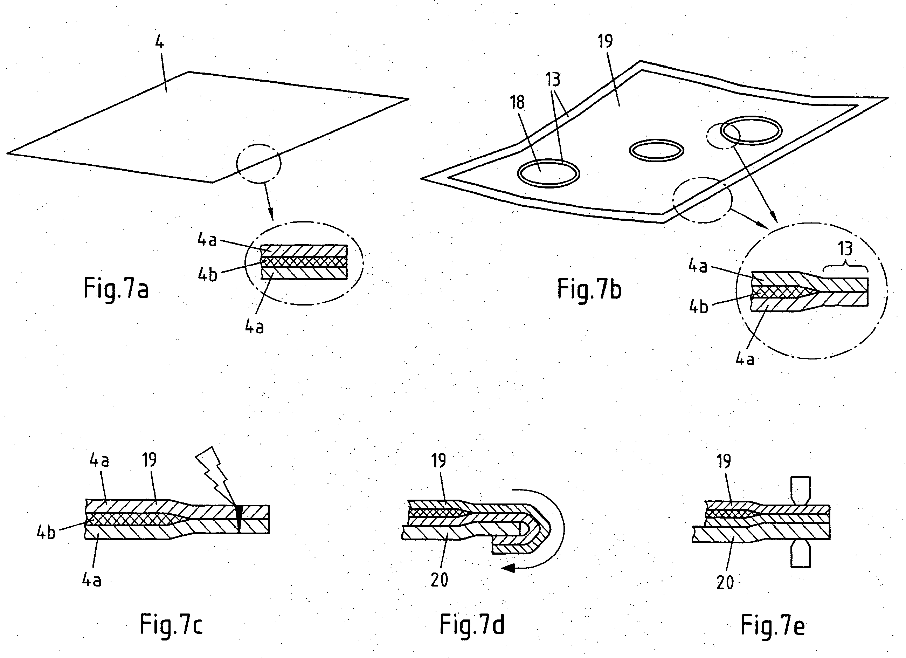

Neben formgebenden, beispielsweise geprägten oder tiefgezogenen Bereichen bietet das erfindungsgemäße Verfahren auch die Möglichkeit unter Verwendung des Formwerkzeugs Ausschnitte in das Verbundblechteil zu schneiden und diese gleichzeitig mit einem metallischen Randbereich zu versehen. Dies zeigt Fig. 7a) bis 7e). Ausgangspunkt des Verfahrens ist üblicherweise eine Verbundblechplatine 4 mit zwei metallischen Deckblechen 4a und einer dazwischen liegenden Kunststoffschicht 4b, wie sie in Fig. 7a) im vergrößerten Ausschnitt gezeigt ist. Mit dem erfindungsgemäßen Verfahren wird jetzt die Verbundblechplatine 4 umgeformt, mit einem metallischen Bereich 13 versehen und gleichzeitig Löcher 18 in das Verbundblechteil geschnitten, so dass ein anwendungsspezifisches Verbundblechteil 19 bereitgestellt werden kann.

Wie im vergrößerten Ausschnitt in Fig. 7b) zu erkennen ist, weist nicht nur der Randbereich des Verbundblechteils 19 einen metallischen Bereich 13 auf, sondern auch die im inneren liegenden Löcher 18 des Verbundblechteils 19.

Wie bereits ausgeführt, können die metallischen Bereiche punkt- oder bereichsweise gefügt werden, Fig. 7c). In Fig. 7c) ist beispielsweise ein Laserstrahlschweißen zum bereichs- oder punktweisen Fügen des Verbundblechteils 19 dargestellt. Weitere Verbindungsmöglichkeiten mit einem weiteren Bauteil 20 zeigen Fig. 7d) und Fig. 7e) in einer schematischen Schnittansicht. Das Verbundblechteil 19 ist über eine Falz oder über eine Fügenaht, welche beispielsweise über ein Widerstandsfügen hergestellt wurde, mit dem Bauteil 20 verbunden. Die Verbundblechteile 19 lassen sich so besonders einfach im Kraftfahrzeugbau verwenden, beispielsweise als Motorhaube.

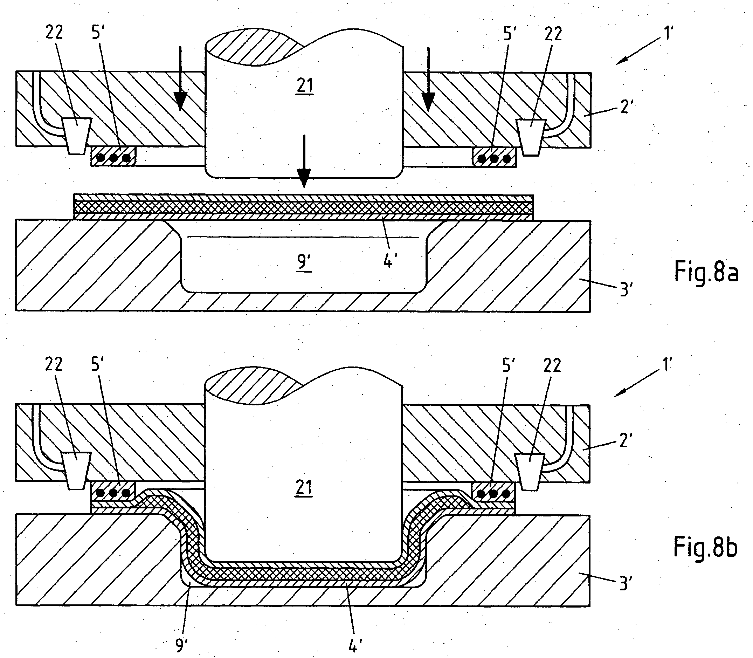

Ein weiteres Ausführungsbeispiel des erfindungsgemäßen Verfahrens ist in Fig. 8a) und Fig. 8b) dargestellt. Die Figuren zeigen ein Formwerkzeug 1' mit Mitteln zur Kraftbeaufschlagung 5' eines Bereichs einer Verbundblechplatine 4'. Als Mittel zur Umformung ist ein Tiefziehstempel 21 vorgesehen, welcher den nicht erwärmten Bereich der Verbundblechplatine 4' in eine in der unteren Werkzeughälfte 3' vorgesehenen Matrize 9' tiefzieht. Die Kraftbeaufschlagungsmittel 5', hier in Form eines feststehenden Stempels dargestellt, sind temperiert und erwärmen die Verbundblechplatine 4' in einem spezifischen Bereich beim Kontakt konduktiv. Anschließend wird der Kunststoff aus diesen Bereichen herausgedrückt und über eine Absaugvorrichtung 22 abgesaugt. Im Ergebnis kann auch mit dem Formwerkzeug eine Verbundblechplatine 4' zu einem Verbundblechteil tiefgezogen und gleichzeitig ein metallischer Bereich, insbesondere ein metallischer Randbereich in einem einzigen Verfahrensschritt hergestellt werden.

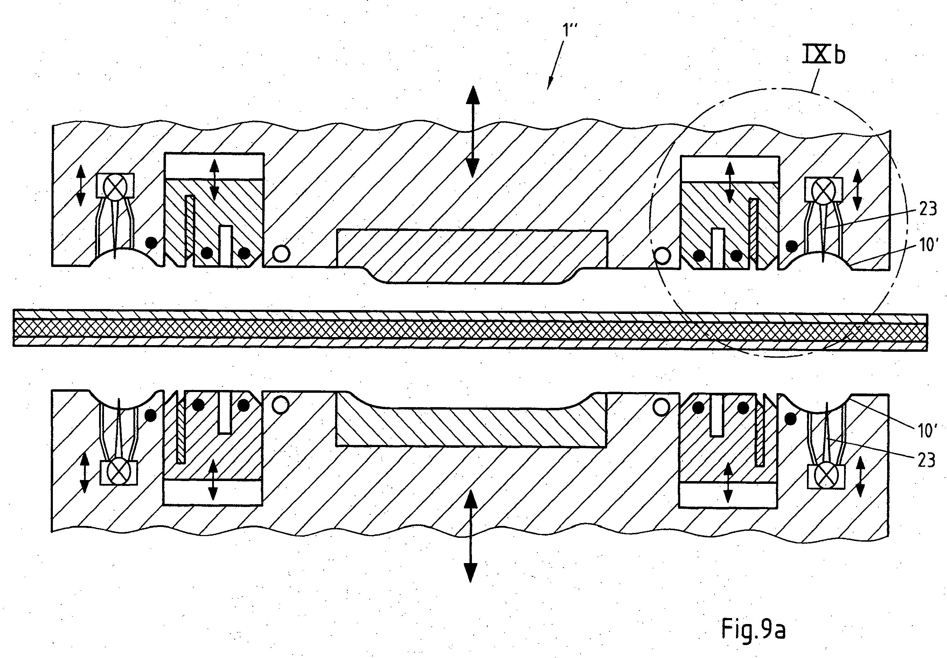

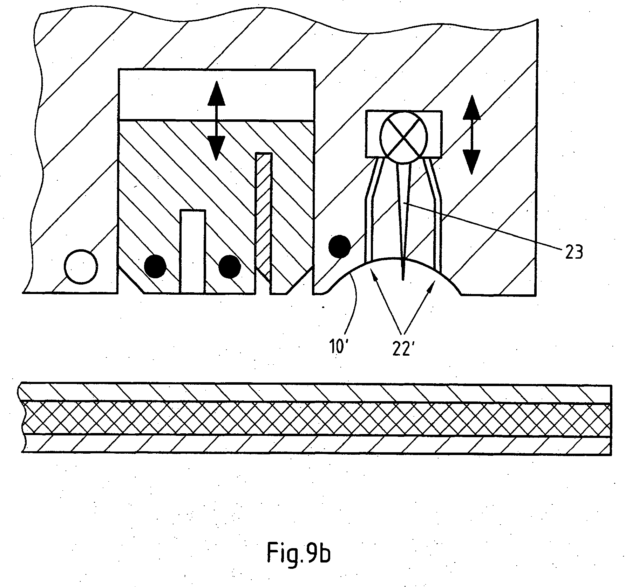

Ein weiteres Ausführungsbeispiel des erfindungsgemäßen Verfahrens ist in den Fig. 9a) bis 11b) gezeigt. Die Figuren zeigen ein Formwerkzeug 1'', das im Wesentlichen der Ausgestaltung des Formwerkzeugs 1 gemäß Figuren 1) bis 5) entspricht und daher auf die wesentlichen Bestandteile des Formwerkzeug hier nicht näher eingegangen wird. Der Unterschied besteht darin, dass in den Formhohlräumen 10' Mittel zur Durchdringung des metallischen Deckblechs, hier am Beispiel eines axial verfahrbaren, lokalen Stichdorn 23 und eine Absaugvorrichtung bzw. Absaugkanäle die mit einer Absaugvorrichtung verbunden sind und im Formhohlraum 10' münden, vorgesehen sind (Fig. 9b)).

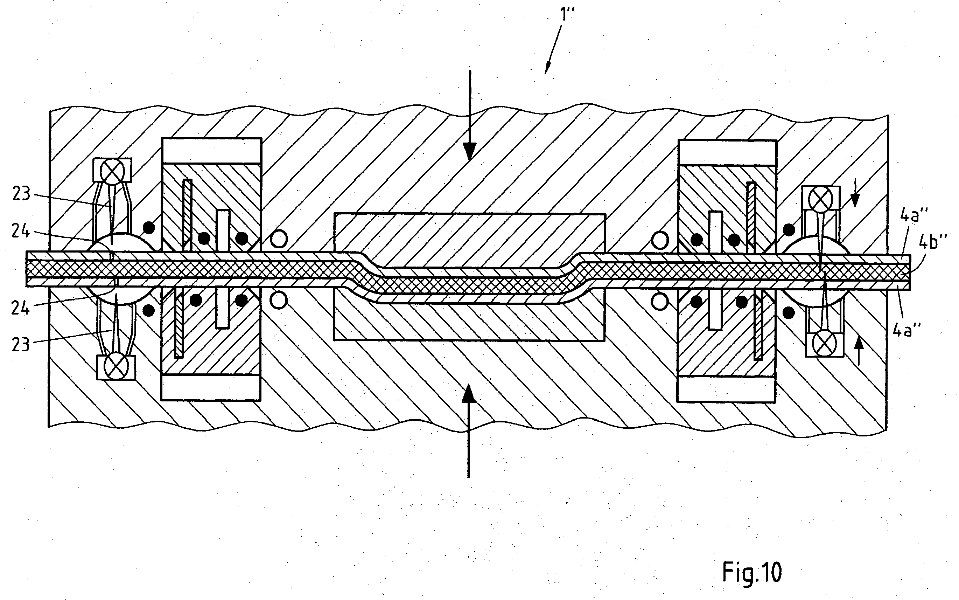

Fig. 10 zeigt das Formwerkzeug 1'' in geschlossenem Zustand. Das Durchdringen bzw. Lochen der metallischen Deckbleche 4a'' kann mittels Stichdorn 23 vor, während oder nach Erwärmen der entsprechenden Bereiche des Verbundblechteils erfolgen. Die zusätzlich in den Formhohlräumen 10' angeordnete Absaugvorrichtung bzw. Absaugkanäle 22', die mit einer Absaugvorrichtung verbunden sind, saugen den aus dem temperierten Bereich und durch die in den metallischen Deckblechen 4a'' eingebrachten Öffnungen 24 heraustretenden Kunststoff ab.

Im Ergebnis lassen sich so Verbundblechteile für die unterschiedlichsten Verwendungszwecke, beispielsweise im Kraftfahrzeugbau, Schiffsbau, Flugzeugbau oder aber auch für die Haushaltsgeräteindustrie herstellen.

## Patentansprüche

1. Verfahren zur Herstellung eines Verbundblechteils (40) mit mindestens einem metallischen Bereich aus einer Verbundblechplatine (4) welche zwei äußere Deckbleche (4a) aus Metall und mindestens eine zwischen den Deckblechen angeordnete Schicht (4b) bestehend aus einem Kunststoff aufweist, bei dem
- eine Verbundblechplatine (4) in ein Formwerkzeug (1, 1', 1") eingelegt wird,
- im Formwerkzeug (1, 1', 1") mindestens ein ausgewählter Bereich der Verbundblechplatine (4) derart erwärmt wird, dass die zwischen den äußeren Deckblechen (4a) angeordnete Kunststoffschicht (4b) erweicht,
- unter Verwendung des Formwerkzeugs (1, 1', 1") durch eine Kraftbeaufschlagung auf mindestens ein außeres Deckblech (4a) in diesem Bereich der Verbundblechplatine (4) die Deckbleche (4a) punkt- oder bereichsweise gegeneinander gedrückt werden, so dass die Kunststoffschicht (4b) aus dem mit einer Kraft beaufschlagten Bereich austritt und ein metallischer Bereich erzeugt wird und
- anschließend an die Kraftbeaufschlagung oder gleichzeitig mit der Kraftbeaufschlagung beide Deckbleche (4a) im gequetschten Bereich zumindest bereichs- oder punktweise miteinander gefügt werden,
**dadurch gekennzeichnet, dass** die Erwärmung des ausgewählten Bereichs der Verbundblechplatine (4) im Formwerkzeug (1, 1', 1") unter Verwendung von im Formwerkzeug angeordneten Mitteln (6, 7) zur lokalen Temperierung der Verbundblechplatine (4) erfolgt.

2. Verfahren nach Anspruch 1,
**dadurch gekennzeichnet, dass** als Mittel (6, 7) zur lokalen Temperierung der Verbundblechplatine (4) im Formwerkzeug (1, 1', 1") Heiz- und optional Kühlelemente angeordnete sind, welche die Verbundblechplatine (4) zumindest in dem ausgewählten Bereich temperieren.

3. Verfahren nach Anspruch 1 oder 2,
**dadurch gekennzeichnet, dass** im Formwerkzeug (1, 1', 1") vorgesehene formgebende Mittel (8, 9) die Verbundblechplatine während oder nach der Erzeugung der metallischen Bereiche formen, tiefziehen, schneiden und/oder prägen.

4. Verfahren nach einem der Ansprüche 1 bis 3,
**dadurch gekennzeichnet, dass** bei der Erzeugung der metallischen Bereiche des Verbundblechteils (4) der Kunststoff zwischen den Deckblechen (4a) in im Formwerkzeug (1, 1', 1") vorgesehene Hohlräume (10) fließt.

5. Verfahren nach einem der Ansprüche 1 bis 4,
**dadurch gekennzeichnet, dass** die Verbundblechplatine (4) nach dem Einbringen der metallischen Bereiche durch im Formwerkzeug (1, 1' ,1") vorgesehene Schneidmittel (12) beschnitten wird.

6. Formwerkzeug (1, 1' ,1") zur Herstellung eines Verbundblechteils (40) aus einer Verbundblechplatine (4) bestehend aus zwei Deckblechen (4a) und mindestens einer zwischen den Deckblechen angeordneten Kunststoffschicht (4b) zur Durchführung eines Verfahrens nach einem der Ansprüche 1 bis 6, mit
- mindestens zwei Gesenkhälften (2,3), welche relativ zueinander bewegbar sind,
- Mitteln zur Aufnahme einer Verbundblechplatine (4) in einer Gesenkhälfte (2, 3)
- Mitteln (8,9) zur Umformung der Verbundblechplatine (4) in ein Verbundblechteil (40), und **gekennzeichnet durch** :
- Mittel (5,5') zur Kraftbeäufschlägung mindestens eines äußeren Deckblechs (4a) in mindestens einem ausgewählten Bereich der Verbundblechplatine (4"), so dass die Deckbleche (4a) punkt- oder bereichsweise gegeneinander gedrückt werden können, so dass der Kunststoff in dem ausgewählten Bereich (4") der Verbundblechplatine (4) zumindest teilweise austreten kann und ein metallischer Bereich erzeugt wird, und
**dadurch gekennzeichnet, dass** im Formwerkzeug (1) Temperierungsmittel (6,7) vorgesehen sind, um die Verbundblechplatine (4) in den ausgewählten Bereichen (4'') zu temperieren.

7. Formwerkzeug (1, 1', 1") nach Anspruch 6,
**dadurch gekennzeichnet, dass** die Temperierungsmittel Heizmittel (6) und Kühlungsmittel (7) umfassen.

8. Formwerkzeug (1, 1', 1") nach Anspruch 6 oder 7,
**dadurch gekennzeichnet, dass** im Formwerkzeug (1, 1', 1") Mittel (8,9) vorgesehen sind, mit welchen die Verbundblechplatine (4) während oder nach der Erzeugung der metallischen Bereiche geformt, tiefgezogen, geschnitten und/oder geprägt werden kann.

9. Formwerkzeug (1, 1', 1") nach einem der Ansprüche 6 bis 8,
**dadurch gekennzeichnet, dass** im Formwerkzeug (1, 1', 1") Mittel zum Fügen der Deckbleche des mindestens einen metallischen Bereichs des Verbundblechteils (4) vorgesehen sind.

10. Formwerkzeug (1, 1', 1") nach einem der Ansprüche 6 bis 9,
**dadurch gekennzeichnet, dass** mindestens ein Formhohlraum (10) vorgesehen ist, welcher zur Aufnahme von verdickten Bereichen der Verbundblechplatine (4) dient.

11. Formwerkzeug (1, 1', 1") nach einem der Ansprüche 6 bis 10,
**dadurch gekennzeichnet, dass** alternativ oder kumulativ eine Absaugvorrichtung (22) zur Entfernung des Kunststoffes nach dem Austreten aus den ausgewählten Bereichen der Verbundblechplatine (4) vorgesehen ist.

## Claims

1. Method for producing a composite sheet metal part (40) having at least one metallic region from a composite sheet metal blank (4) which has two outer cover sheets (4a) of metal and at least one layer (4b) which is arranged between the cover sheets and consists of a plastics material, **characterised in that**
- a composite sheet metal blank (4) is introduced into a forming tool (1, 1', 1''),
- in the forming tool (1, 1', 1''), at least one selected region of said blank (4) is heated such that the plastics layer (4b) arranged between the outer cover layers (4a) softens,
- using the forming tool (1, 1', 1''), by applying a force to at least one outer cover layer (4a) of the composite sheet metal blank (4), the cover sheets (4a) are pressed against each other at certain points or in certain areas in this region so that the plastics layer (4b) issues out of the region subjected to a force and a metallic region is produced, and
- subsequently to the application of force or at the same time as the application of force, both cover sheets (4a) are joined together at least in certain areas or at certain points in the squeezed region,
**characterised in that** the selected region of the composite sheet metal blank (4) is heated in the forming tool (1, 1', 1'') using means (6, 7) arranged in the forming tool (1, 1', 1'') for locally regulating the temperature of the composite sheet metal blank (4).

2. Method according to claim 1, **characterised in that** heating elements and optionally cooling elements which regulate the temperature of the composite sheet metal blank (4) at least in the selected region are arranged in the forming tool (1, 1', 1'') as means (6, 7) for locally regulating the temperature of the blank (4).

3. Method according to claim 1 or 2, **characterised in that** shaping means (8, 9) provided in the forming tool (1, 1', 1'') shape, deep-draw, cut and/or emboss the composite sheet metal blank during or after the production of the metallic regions.

4. Method according to any one of claims 1 to 3, **characterised in that** during the production of the metallic regions of the composite sheet metal part (4), the plastics material flows between the cover sheets (4a) into cavities (10) provided in the forming tool (1, 1', 1'').

5. Method according to any one of claims 1 to 4, **characterised in that** the composite sheet metal blank (4) is trimmed by cutting means (12) provided in the forming tool (1, 1', 1'') after the introduction of the metallic regions.

6. Forming tool (1, 1', 1'') for producing a composite sheet metal part (40) from a composite sheet metal blank (4) consisting of two cover sheets (4a) and at least one plastics layer (4b) arranged between the cover sheets, for implementing a method according to any one of claims 1 to 6, comprising
- at least two die halves (2, 3) which are movable relative to one another,
- means for receiving a composite sheet metal blank (4) in one die half (2, 3),
- means (8, 9) for forming the composite sheet metal bank (4) into a composite sheet metal part (40), and
**characterized in that**:
- means (5, 5') for applying a force to at least one outer cover sheet (4a) in at least one selected region of the composite sheet metal blank (4''), so that the cover sheets (4a) are pressed against each other at certain points or in certain areas so that the plastics material can at least partly issue in the selected region (4'') of the blank (4) and a metallic region is produced, and comprising and
**characterised in that** temperature regulating means (6, 7) are provided in the forming tool (1) to regulate the temperature of the composite sheet metal blank (4) in the selected regions (4'').

7. Forming tool (1, 1', 1'') according to claim 6, **characterised in that** the temperature regulating means comprise heating means (6) and cooling means (7).

8. Forming tool (1, 1', 1'') according to claim 6 or 7, **characterised in that** provided in the forming tool (1, 1', 1'') are means (8, 9) which can shape, deep-draw, cut and/or emboss the composite sheet metal blank (4) during or after the production of the metallic regions.

9. Forming tool (1, 1', 1'') according to any one of claims 6 to 8, **characterised in that** provided in the forming tool (1, 1', 1'') are means for joining the cover sheets of the at least one metallic region of the composite sheet metal part.

10. Forming tool (1, 1', 1'') according to any one of claims 6 to 9, **characterised in that** at least one mould cavity (10) is provided which is used to receive thickened regions of the composite sheet metal blank (4).

11. Forming tool (1, 1', 1'') according to any one of claims 6 to 10, **characterised in that** alternatively or cumulatively, a suction device (22) is provided for removing the plastics material after it has issued out of the selected regions of the blank (4).

## Revendications

1. Procédé de fabrication d'une pièce de tôle composite (40) comportant au moins une zone métallique constituée d'une platine de tôle composite (4), qui présente deux tôles de recouvrement extérieures (4a) en métal et au moins une couche (4b) disposée entre les tôles de recouvrement constituée d'un plastique, dans lequel
- une platine de tôle composite (4) est placée dans un outil de formage (1, 1', 1''),
- dans l'outil de formage (1, 1', 1'') au moins une zone sélectionnée de la platine de tôle composite (4) est chauffée de telle sorte que la couche de plastique (4b) disposée entre les tôles de recouvrement extérieures (4a) se ramollisse,
- en utilisant l'outil de formage (1, 1', 1'') par une sollicitation de force sur au moins une tôle de recouvrement (4a) extérieure dans cette zone de la platine de tôle composite (4) les tôles de recouvrement (4a) sont pressées l'une contre l'autre ponctuellement ou par endroits, de telle sorte que la couche de plastique (4b) ressorte de la zone sollicitée par une force et qu'une zone métallique soit générée et
- consécutivement à la sollicitation de force ou simultanément à la sollicitation de force les deux tôles de recouvrement (4a) dans la zone coincée sont assemblées l'une à l'autre au moins ponctuellement ou par endroits,
**caractérisé en ce que**
le chauffage de la zone sélectionnée de la platine de tôle composite (4) dans l'outil de formage (1, 1', 1'') a lieu en utilisant des moyens (6, 7) disposés dans l'outil de formage pour la thermorégulation locale de la platine de tôle composite (4).

2. Procédé selon la revendication 1,
**caractérisé en ce que**
comme moyen de thermorégulation (6, 7) locale de la platine de tôle composite (4) dans l'outil de formage (1, 1', 1'') des éléments de chauffage et optionnellement de refroidissement sont disposés, qui thermorégulent la platine de tôle composite (4) au moins dans la zone sélectionnée.

3. Procédé selon la revendication 1 ou 2,
**caractérisé en ce que**
des moyens de façonnage (8, 9) prévus dans l'outil de formage (1, 1', 1'') façonnent, emboutissent, découpent et/ou estampent la platine de tôle composite pendant ou après la génération des zones métalliques.

4. Procédé selon une des revendications 1 à 3,
**caractérisé en ce que**
lors de la génération des zones métalliques de la pièce de tôle composite (4) le plastique s'écoule entre les tôles de recouvrement (4a) dans les espaces creux (10) prévus dans l'outil de formage (1, 1' , 1'').

5. Procédé selon une des revendications 1 à 4,
**caractérisé en ce que**
la platine de tôle composite (4) est découpée après l'introduction des zones métalliques à travers le moyen de découpe (12) prévu dans l'outil de formage (1, 1', 1").

6. Outil de formage (1, 1', 1") pour la fabrication d'une pièce de tôle composite (40) constituée d'une platine de tôle composite (4) composée de deux tôles de recouvrement (4a) et d'au moins une couche de plastique (4b) disposée entre les tôles de recouvrement afin de mettre en oeuvre le procédé selon une des revendications 1 à 6, comportant :
- au moins deux demi-matrices (2, 3), qui sont déplaçables l'une par rapport à l'autre,
- des moyens pour recevoir une platine de tôle composite (4) dans une demi-matrice (2, 3),
- des moyens (8, 9) de façonnage de la platine de tôle composite (4) dans une pièce de tôle composite (40), et **caractérisé par**
- un moyen (5, 5') de sollicitation par une force d'au moins une tôle de recouvrement extérieure (4a) dans au moins une zone sélectionnée de la platine de tôle composite (4''), de telle sorte que les tôles de recouvrement (4a) puissent être pressées l'une contre l'autre ponctuellement ou par endroits, de telle sorte que le plastique dans la zone sélectionnée (4'') de la platine de tôle composite (4) puisse ressortir au moins partiellement et qu'une zone métallique soit générée, et
**caractérisé en ce que**
dans l'outil de formage (1) des moyens de thermorégulation (6, 7) sont prévus, afin de thermoréguler la platine de tôle composite (4) dans les zones sélectionnées (4'').

7. Outil de formage (1, 1', 1") selon la revendication 6,
**caractérisé en ce que**
les moyens de thermorégulation comprennent des moyens chauffants (6) et des moyens de refroidissement (7).

8. Outil de formage (1, 1', 1") selon la revendication 6 ou 7,
**caractérisé en ce que**
dans l'outil de formage (1, 1' , 1") des moyens (8, 9) sont prévus, avec lesquels la platine de tôle composite (4) est façonnée, emboutie, découpée et/ou estampée pendant ou après la génération des zones métalliques.

9. Outil de formage (1, 1', 1") selon une des revendications 6 à 8,
**caractérisé en ce que**
dans l'outil de formage (1, 1', 1") des moyens pour assembler les tôles de recouvrement d'au moins une zone métallique de la pièce de tôle composite (4) sont prévus.

10. Outil de formage (1, 1', 1") selon une des revendications 6 à 9,
**caractérisé en ce**
**qu'**au moins un espace creux de moule (10) est prévu, qui sert à recevoir les zones épaissies de la platine de tôle composite (4).

11. Outil de formage (1, 1', 1") selon une des revendications 6 à 10,
**caractérisé en ce**
**qu'**en variante ou en supplément un dispositif d'aspiration (22) pour éliminer le plastique après la sortie hors des zones sélectionnées de la platine de tôle composite (4) est prévu.
